# EUROPEAN PATENT SPECIFICATION

(11) **EP 1 060 139 B1**
(45) Date of publication and mention of the grant of the patent: **07.01.2004**
(21) Application number: 99904010.8
(22) Date of filing: 16.02.1999
(51) Int. Cl.: C03B 37/05

(54) **AUTOMATIC MELT STREAM POSITIONING DEVICE**
AUTOMATISCHE SCHMELZSTROM POSITIONIERUNGSVORRICHTUNG
DISPOSITIF DE PLACEMENT AUTOMATIQUE D'UN FLUX DE MATIERE EN FUSION

(30) Priority: 23.02.1998 SI 9800053
(43) Date of publication of application: 20.12.2000
(73) Proprietor: Termo d.d. Industrija Termicnih Izolacij, Skofjaloka, 4220 Skofja Loka (SI)
(72) Inventor: TRDIC , Francelj, 1231 Ljubljana (SI); SIROK, Branko, 1360 Vrhnika (SI); MIHOVEC, Bojan, 4220 Skofja Loka (SI); STREMFELJ, Branko, 3270 Lasko (SI)
(74) Representative: Grünecker, Kinkeldey, Stockmair & Schwanhäusser Anwaltssozietät
(86) International application number: PCT/SI1999/000004
(87) International publication number: WO 1999/042413

(56) References cited:
- WO-A-96/36573
- CA-A- 531 816

## Description

The invention relates to a device for positioning the melt stream on the first rotating disk of an apparatus for scattering rock wool into fibers.

In the hitherto known apparatuses for scattering rock wool into fibers the mineral melt is poured onto the first rotating disk, where it is scattered due to the centrifugal force and the mechanical properties of the melt itself, so that part of it drops onto the second rotating disk, whereas the remaining part is blown off by the axial air flow in the form of fibers. The second rotating disk scatters the melt by means of the centrifugal force, so that part of it drops onto the third rotating disk, whereas the remaining part is blown off by the axial air flow in the form of fibers. Usually, apparatuses for scattering rock wool into fibers comprise up to four rotating disks.

It is known that the quality and the quantity of the mineral fibers depend upon the point (i e the angle), where the melt streams onto the first rotating disk.

Most of known methods for positioning the melt stream on the first rotating disk of an apparatus for scattering rock wool into fibers are manual. The most common one involves the operator observing the point (i e the angle) where the melt is streaming onto the first rotating disk, and setting it or adjusting it manually. In another implementation the operator observes, via a video-camera, the point (i e the angle) where the melt is streaming onto the first rotating disk, and sets it or adjusts it manually using servomechanisms.

The said known solutions have some common disadvantages, namely: the adjustments are subjective, the reaction times long, and the settings inaccurate.

In A-EP 0 622 341 a device for automatic automatic positioning of the melt stream is described. The device is characterized in that the malt stream is only horizontally obseved with two line cameras. Data acquired by both cameras are processed and used to control the relative displacement of the stream. With such a solution two cameras are needed and the data relates only to melt stream position.

The object of the present invention is to provide a device for automatic positioning of the melt stream on the first rotating disk of an apparatus for scattering rock wool into fibers, that will provide automatic, fast, precise and optimum positioning of the melt stream on the first rotating disk of the apparatus for scattering rock wool into fibers.

According to the present invention the problem is solved by the device according to claim 1.

The device for automatic positioning of the melt stream on the first rotating disk of an apparatus for scattering rock wool into fibers will be described with reference to a sample embodiment illustrated in the following figures 1 to 7:
- Figure 1: A schematic drawing of the melt streaming onto the first rotating disk and other rotating disks.
- Figure 2: A diagram representing the dependence of product quality and waste upon the position of the melt stream.
- Figure 3: The appearance of quality fibers.
- Figure 4: The appearance of low quality fibers.
- Figure 5: The configuration of the elements of the device according to the invention.
- Figure 6: The electrical functional diagram of the device according to the invention.
- Figure 7: The image of the melt stream and of the rotating disks as seen, analyzed and displayed by the device according to the invention.

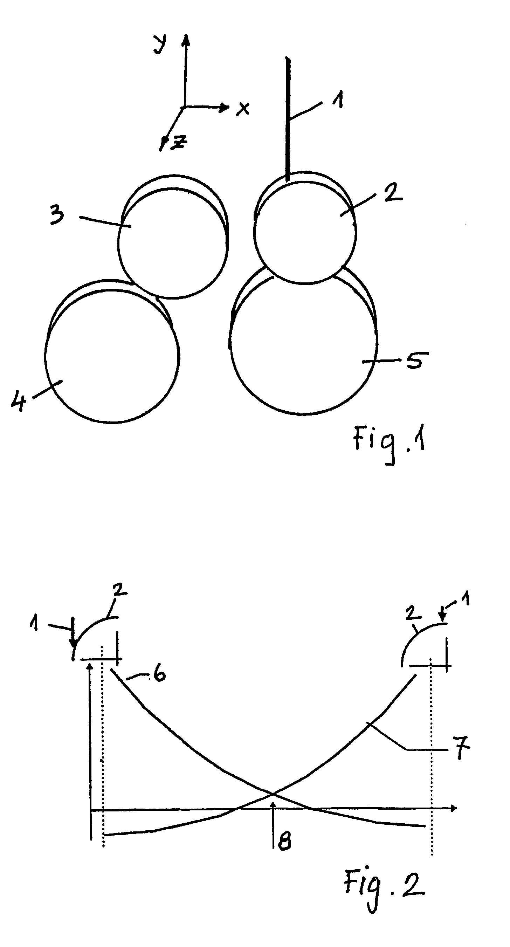

It can be seen in Figure 1, which schematically shows the melt streaming onto the first rotating disk and other rotating disks, that the melt jet 1 streams onto the first rotating disk 2. The rotating disks 3, 4 and 5 rotate in such directions that part of the melt is dropped onto the next disk, whereas the remaining part of it is blown off along the Z axis by the axial air flow.

It has been experimentally determined that the quality of the product, namely of the rock wool fibers, depends upon the position of the jet 1 stream on the first rotating disk, mainly along the X axis and somewhat less along the Z axis. Figure 2 shows a diagram of the dependence of product quality and waste upon the X-position of the melt jet 1 on the first rotating disk 2. At the left end of the X axis in Figure 2 the case is shown when the melt jet 1 streams tangentially onto the first rotating disk, which is to say at an angle of nearly 0°, whereas at its right end we have the opposite situation with the melt jet 1 streaming onto the center of the first rotating disk 2, that is to say at an angle of 90°. The diagram in Figure 2 shows all the intermediate situations, relative to the X direction, between these two extreme positions of the jet 1 stream on the first rotating disk. As can be seen, the amount of waste melt accumulating below the rotating disks 2, 3, 4 and 5, represented by the curve 6, is great when the melt jet 1 streams tangentially onto the first rotating disk 2, and diminishes as the distance from the border is increased (nearing the center). It can be seen, furthermore, that the quantity of undesired cinder, i e non-fibrous particles of melt, in the product, represented by the curve 7, is small when the melt streams tangentially onto the first rotating disk 2, and increases as the distance from the border is increased (nearing the center). As it turns out, the optimum point 8 on the rotating disk 2 relative to the X axis is the point of intersection of the curves 6 and 7. With regard to the Z direction, it is situated on the middle third of the thickness of the rotating disk 2. The device according to the invention will provide automatic, fast, precise and optimum positioning of the melt jet 1 on the first rotating disk 2 of the apparatus for scattering rock wool into fibers.

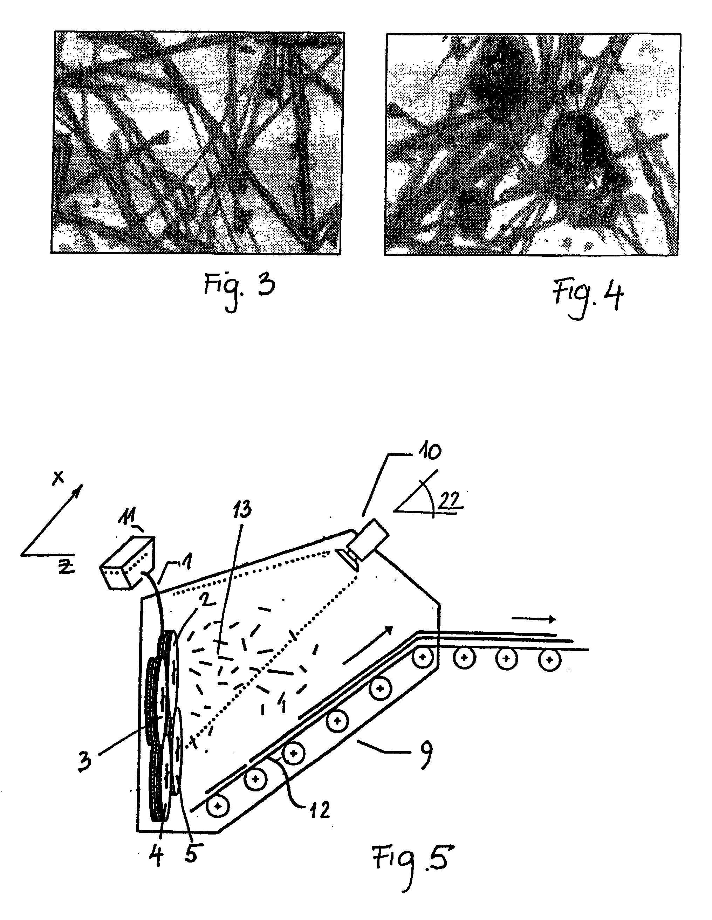

Figure 3 shows a quality product, that is rock wool fibers without non-fibrous particles of melt, while in Figure 4 non-fibrous particles of solidified melt can be seen as dark blots.

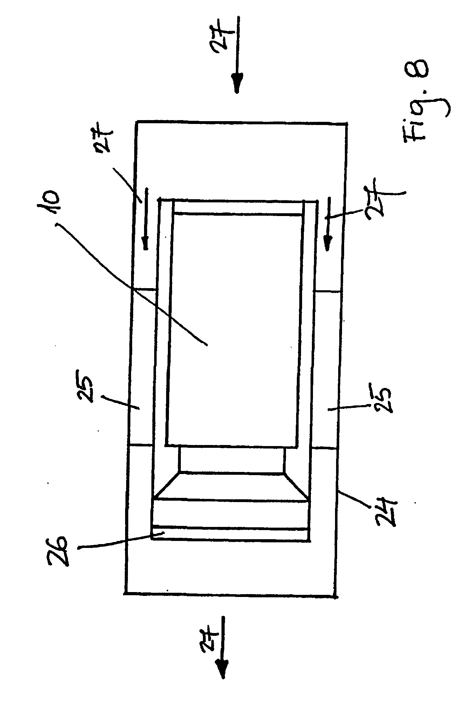

The configuration of the device for automatically positioning the melt stream on the first rotating disk of the apparatus for scattering rock wool into fibers, according to the invention and as represented in Figure 5, consists of a settling chamber 9 with a conveyor belt 12, rotating disks 2, 3, 4 and 5, and a video camera 10, and of a melt tank 11. The melt jet 1 streams onto the first rotating disk 2, where it is partly blown off along the Z axis in the form of fibers 13 toward the conveyor belt 12, partly it is scattered onto the rotating disks 3, 4 and/or 5, and partly it drops in non-fibrous form on the ground below the rotating disks, as represented by the curve 6 in Figure 2. The melt tank 11 is moved by any known method along the Z and X axes by means of two propelling motors 19 and 20, so that the melt jet 1 can be positioned on the desired spot on the rotating disk 2. The video camera 10 is placed above the flow of fibers 13 and is additionally protected against the deposition of fibers 13 by introducing an air flow 27 in Figure 8 along the optical axis of the camera 10 and directing it toward the disks (2, 3, 4, 5). The camera 10 in Figure 8 is placed in a tunnel 24 and fastened to it by means of longitudinal supports 25. In front of the optics of the video camera 10 a protecting glass 26 is located, preferably made of hardened glass. The air flow 27 blows the fibers 13 off and at the same time it cools the camera 10.

The video camera 10 is positioned in such a way that its optical axis makes an angle of from 25 to 45° with the Z axis and lies on the vertical plane that contains the Z axis itself, this vertical plane extending in the middle of the gap between the first rotating disk 2 and the second rotating disk 3 within a 10% tolerance relative to the overall width of the system of rotating disks 2, 3, 4 and 5. The field of vision of the video camera 10, focused on the gap between the rotating disks 2 and 3, encompasses the melt jet 1, the entire rotating disks 2 and 3, and the upper part of the rotating disks 4 and 5. Under these conditions, the video camera 10 sufficiently covers the jet 1 stream relative to the X and Z axes.

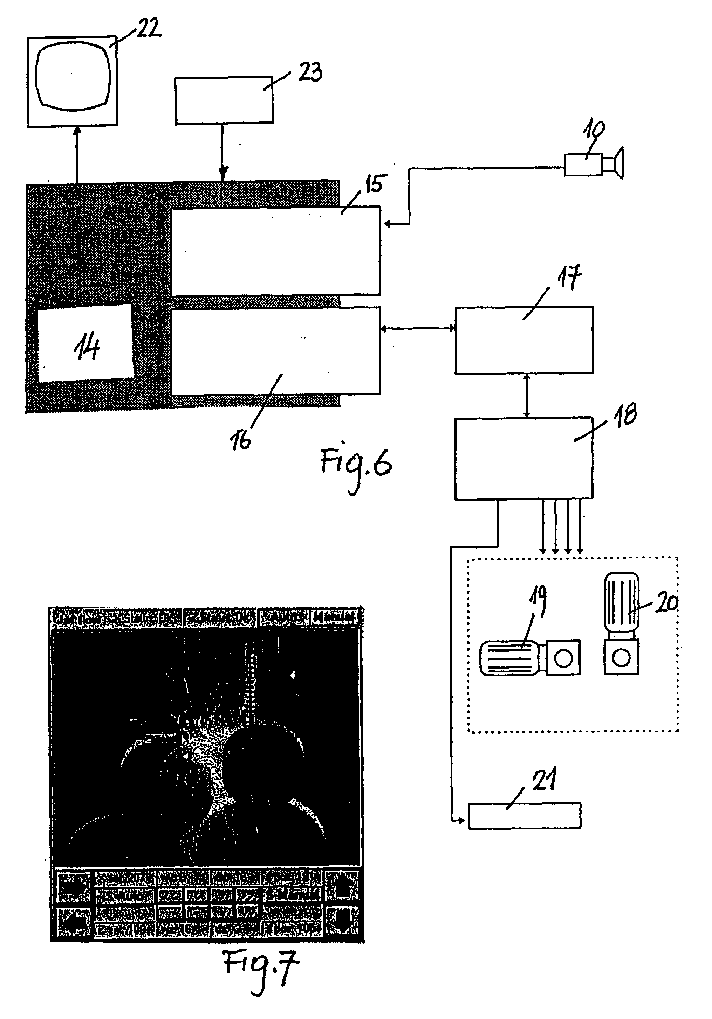

The electrical functional diagram of the device according to the invention in Figure 6 shows that the device according to the invention is composed of the video camera 10 connected to the digitizer 15. The digitizer 15 is a component of the electronic unit 14, which also comprises the output controller 16. Via the distribution board 17 this output controller 16 is connected to the relay block 18, by means of which the alarm 21 of the camera 10 and the motors 19 and 20 for moving the tank 11 are switched on. In the sample embodiment, the electronic circuit 14 with the digitizer 15, the output controller 16, the monitor 22 and the input unit 23 (a keyboard, for example) are realized by means of a computer that recognizes the image received from the video camera 10 and via a computer program makes adjustments to the tank 11, thereby positioning the jet 1 on the first rotating disk 2.

Figure 7 shows the image as displayed on the monitor 22, upon which image not only the analysis of the position of the jet 1 is based but, by means of the propelling motors 19 and 20 and of appropriate mechanisms, the automatic positioning of the melt jet 1 on the first rotating disk 2 of the apparatus for scattering rock wool into fibers is based as well.

## Claims

1. Device for the automatic positioning of a melt stream on a first rotating disk (2) and then on at least a further rotating disk (3) of an apparatus for scattering rock wool into fibers, where the tank (11) discharging said melt stream is movable in a first direction (Z) parallel to the axis of the first rotating disk (2) and in a second horizontal direction (X) perpendicular to said first direction (Z), and with at least one video camera (10) placed above the flow of fibers (13), **characterized in that** the optical axis of said video camera (10) and said first direction (Z) form an angle of 25 to 45 degrees in vertical direction, said video camera (10) is arranged inside a settling chamber (9) to which said rotating disks scatter said fibers and is connected to a digitizer (15) of an electronic unit (14) in form of a computer, which electronic unit (14) further comprises an output controller (16) connected to a relay block (18) via a distribution board (17), which relay block (18) controls an alarm (21) of the video camera (10) and motors (19, 20) for moving the tank (11) for automatically positioning said melt stream (1) at a point on the first rotating disk (2), said point being controlled by images received from said one video camera (10) and said point being determined relative to said second direction as the point of intersection of a curve (6) representing the amount of waste melt and a curve (7) representing the amount of undesired cinder.

2. Device according to claim 1, **characterized in that** the optical axis of the video camera (10) lies in a vertical plane parallel to the first direction (Z), this vertical plane extending along the middle of a gap between the first rotating disk (2) and the second rotating disk (3) within a 10% tolerance relative to the overall width of the system of rotating disks (2, 3, 4, 5), wherein the video camera (10) is focused on the gap between the first and second rotating disks (2,3 ).

3. Device according to claim 1 or 2, **characterized in that** an air flow (27) is directed along the optical axis of the video camera (10) towards the disks (2, 3, 4, 5) to protect the video camera against the deposition of fibers (13) and to cool it.

4. Device according to claims 1 or 2, **characterized in that** said scattering apparatus comprises two further disks (4, 5) arranged below the first and second rotating disks (2, 3), respectively.

5. Device according to one of the previous claims, **characterized in that** the video camera (10) is placed in a tunnel (24) and fastened to it by means of longitudinal supports (25).

6. Device according to one of the previous claims, **characterized in that** a protection glass (26) is arranged in front of the video camera (10) to protect its optics.

7. Device according to one of the previous claims, **characterized in that** at least said scattering apparatus and said video camera (10) are arranged within the settling chamber (9) in which said fibers settle down.

8. Device according to claim 7, **characterized in that** said settling chamber (9) comprises a conveyor belt (12).

## Patentansprüche

1. Vorrichtung zum automatischen Positionieren eines Schmelzestroms auf einer ersten sich drehenden Scheibe (2) und danach auf wenigstens einer weiteren sich drehenden Scheibe (3) einer Vorrichtung zum Zerstreuen von Steinwolle zu Fasern, wobei der Behälter (11), der den Schmelzestrom ausgibt, in einer ersten Richtung (Z) parallel zu der Achse der ersten sich drehenden Scheibe (2) und in einer zweiten horizontalen Richtung (X) senkrecht zu der ersten Richtung (Z) bewegt werden kann und wenigstens eine Videokamera (10) über dem Strom von Fasern (13) angeordnet ist, **dadurch gekennzeichnet, dass** die optische Achse der Videokamera (10) und die erste Richtung (Z) einen Winkel von 25 bis 45 Grad in vertikaler Richtung bilden, die Videokamera (10) im Inneren einer Absetzkammer (9) angeordnet ist, in die die drehenden Scheiben die Fasern streuen, und mit einem Digitalisierer (15) einer elektronischen Einheit (14) in Form eines Computers verbunden ist, wobei die elektronische Einheit (14) des Weiteren eine Ausgangssteuerung (16) umfasst, die mit einem Relaisblock (18) über eine Verteilerplatte (17) verbunden ist, wobei der Relaisblock (18) eine Alarmeinrichtung (21) der Videokamera (10) und Motoren (19, 20) steuert, die den Behälter (11) bewegen, um den Schmelzestrom (1) automatisch an einem Punkt auf der ersten sich drehenden Scheibe (2) zu positionieren, wobei der Punkt durch Bilder gesteuert wird, die von der einen Videokamera (10) empfangen werden, und der Punkt relativ zu der zweiten Richtung als der Schnittpunkt einer Kurve (6), die die Menge an Ausschussschmelze darstellt, und einer Kurve (7), die die Menge an unerwünschtem Zunder darstellt, bestimmt wird.

2. Vorrichtung nach Anspruch 1, **dadurch gekennzeichnet, dass** die optische Achse der Videokamera (10) in einer vertikalen Ebene parallel zu der ersten Richtung (Z) liegt, wobei sich diese vertikale Ebene entlang der Mitte eines Spalts zwischen der ersten sich drehenden Scheibe (2) und der zweiten sich drehenden Scheibe (3) innerhalb einer Toleranz von 10% in Bezug auf die Gesamtbreite des Systems sich drehender Scheibe (2, 3, 4, 5) erstreckt und die Videokamera (10) auf den Spalt zwischen der ersten und der zweiten sich drehenden Scheibe (2, 3) fokussiert ist.

3. Vorrichtung nach Anspruch 1 oder 2, **dadurch gekennzeichnet, dass** ein Luftstrom (27) entlang der optischen Achse der Videokamera (10) auf die Scheiben (2, 3, 4, 5) zu gerichtet ist, um die Videokamera vor der Ablagerung von Fasern (13) zu schützen und sie zu kühlen.

4. Vorrichtung nach den Ansprüchen 1 oder 2, **dadurch gekennzeichnet, dass** die Streuvorrichtung zwei weitere Scheiben (4, 5) umfasst, die unter der ersten bzw. der zweiten sich drehenden Scheibe (2, 3) angeordnet sind.

5. Vorrichtung nach einem der vorangehenden Ansprüche, **dadurch gekennzeichnet, dass** die Videokamera (10) in einem Tunnel (24) angeordnet und daran mit Längsträgern (25) befestigt ist.

6. Vorrichtung nach einem der vorangehenden Ansprüche, **dadurch gekennzeichnet, dass** ein Schutzglas (26) vor der Videokamera (10) angeordnet ist, um ihre Optik zu schützen.

7. Vorrichtung nach einem der vorangehenden Ansprüche, **dadurch gekennzeichnet, dass** wenigstens die Streuvorrichtung und die Videokamera (10) in der Absetzkammer (9) angeordnet sind, in der sich die Fasern absetzen.

8. Vorrichtung nach Anspruch 7, **dadurch gekennzeichnet, dass** die Absetzkammer (9) ein Förderband (12) umfasst.

## Revendications

1. Dispositif de placement automatique d'un flux de matière en fusion sur un premier disque rotatif (2) et ensuite, sur au moins un autre disque rotatif (3) d'un appareil pour disperser la laine de roche en fibres, dans lequel le réservoir (11) déchargeant ledit flux de matière en fusion est mobile dans une première direction (Z), parallèle à l'axe du premier disque rotatif (2) et dans une seconde direction horizontale (X) perpendiculaire à ladite première direction (Z), et avec au moins une caméra vidéo (10) placée au-dessus du flux de fibres (13), **caractérisé en ce que** l'axe optique de ladite caméra vidéo (10) et ladite première direction (Z) forment un angle de 25 à 45 degrés dans la direction verticale, ladite caméra vidéo (10) est agencée à l'intérieur d'une chambre de dépôt (9) vers laquelle lesdits disques rotatifs dispersent lesdites fibres et est connectée à un numériseur (15) d'une unité électronique (14) de la forme d'un ordinateur, laquelle unité électronique (14) comprend en outre un régulateur de sortie (16) connecté à un bloc de relais (18) via un tableau de distribution (17), lequel bloc de relais (18) commande une alarme (21) de la caméra vidéo (10) et des moteurs (19, 20) pour déplacer le réservoir (11) afin de positionner automatiquement ledit flux de matière en fusion (1) à un point sur le premier disque rotatif (2), ledit point étant contrôlé par des images reçues par ladite une caméra vidéo (10) et ledit point étant déterminé par rapport à ladite seconde direction comme le point d'intersection d'une courbe (6) représentant la quantité de matière en fusion résiduelle et d'une courbe (7) représentant la quantité de cendre indésirable.

2. Dispositif selon la revendication 1, **caractérisé en ce que** l'axe optique de la caméra vidéo (10) se trouve dans un plan vertical parallèle à la première direction (Z), ce plan vertical s'étendant sur le milieu de l'espace entre le premier disque rotatif (2) et le second disque rotatif (3) avec une tolérance de 10 % par rapport à la largeur totale du système de disques rotatifs (2, 3, 4, 5), dans lequel la caméra vidéo (10) est concentrée sur l'espace entre les premier et second disques rotatifs (2, 3).

3. Dispositif selon la revendication 1 ou 2, **caractérisé en ce qu'**un flux d'air (27) est dirigé le long de l'axe optique de la caméra vidéo (10) vers les disques (2, 3, 4, 5) pour protéger la caméra vidéo contre le dépôt de fibres (13) et pour la refroidir.

4. Dispositif selon les revendications 1 ou 2, **caractérisé en ce que** ledit appareil de dispersion comprend deux autres disques (4, 5) agencés respectivement sous les premier et second disques rotatifs (2, 3).

5. Dispositif selon l'une des revendications précédentes, **caractérisé en ce que** la caméra vidéo (10) est placée dans un tunnel (24) et est fixée à celui-ci au moyen de supports longitudinaux (25).

6. Dispositif selon l'une des revendications précédentes, **caractérisé en ce qu'**un verre de protection (26) est agencé face à la caméra vidéo (10) pour protéger ses optiques.

7. Dispositif selon l'une des revendications précédentes, **caractérisé en ce qu'**au moins ledit appareil de dispersion et ladite caméra vidéo (10) sont agencés à l'intérieur de la chambre de dépôt (9) dans laquelle lesdites fibres sont déposées.

8. Dispositif selon la revendication 7, **caractérisé en ce que** ladite chambre de dépôt (9) comprend une courroie transporteuse (12).
